(19) Europäisches Patentamt
European Patent Office
Office européen des brevets

(11) **EP 3 929 122 A1**

(12) **EUROPEAN PATENT APPLICATION**
published in accordance with Art. 153(4) EPC

(43) Date of publication:
**29.12.2021 Bulletin 2021/52**

(51) Int Cl.:
***B65G 67/24*** (2006.01)  ***B65G 47/18*** (2006.01)

(21) Application number: **19915613.4**

(86) International application number:
**PCT/KZ2019/000012**

(22) Date of filing: **22.07.2019**

(87) International publication number:
**WO 2020/171683 (27.08.2020 Gazette 2020/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.02.2019 KZ 20190143**

(71) Applicants:
• **NON-COMMERCIAL JOINT STOCK COMPANY
"KAZAKH NATIONAL RESEARCH TECHNICAL
UNIVERSITY"
Almaty, 050013 (KZ)**
• **Joint Stock Company "Sokolov-Sarbais
Mining-Processing Unity"
Kostanaiskaya obl., 111500 (KZ)**

(72) Inventors:
• **KURASHOVICH, Serik Moldabayev
Almaty, 050055 (KZ)**
• **KUZMENKO, Sergei Valentinovich
Kostanaiskaya obl., 111500 (KZ)**
• **KALUZHNYI, Yevgenyi Sergeevich
Kostanaiskaya obl. 111500 (KZ)**
• **DRIZHENKO, Anatolyi Yurievich
Dnipro, 49010 (UA)**
• **ADAMCHUK, Andryi Andreevich
Dnipro, 49019 (UA)**

(74) Representative: **Jeck, Anton
Jeck, Fleck & Partner mbB
Patentanwälte
Klingengasse 2
71665 Vaihingen/Enz (DE)**

(54) **DEVICE FOR TRANSFERRING HARD ROCK FROM A MOTOR VEHICLE TO AN INCLINED CONVEYOR**

(57)     A device for transferring hard rock comprises a bridge having a load-bearing member on pivotable supports, an ore pass, a cone crusher, a feed apron, and an inclined conveyor. The pivotable bridges are connected by hinges to beams arranged perpendicular thereto. A method for transferring hard rock consists in that upon passage of a dump truck, rock is unloaded onto said pivotable bridges, causing the bridges to pivot in a horizontal plane under the effect of the weight in order to arrive at an open position. The rock passes to the cone crusher via the ore pass. After passing through the crusher, the rock is transferred via the feed apron onto the inclined conveyor. The result is a reduction in haulage time.

C - C

Fig. 4

**Description**

The invention relates to mining and, specifically, to devices for transferring mined rock from dump trucks to an inclined conveyor.

A device for unloading dump trucks into a bunker is known, which comprises a swing bridge pivotally connected to the bunker, a counterweight rigidly attached to the swing bridge, supports, pedals for interacting with the wheels of a vehicle, levers to operate the swing bridge, guides for dump truck wheels, and a conveyor [A.Yu. Pavlov, M.S. Rogach, Ye.K. Klubnichkin, Ye.Ye. Ivanova, and A.P. Propletin, "Device for unloading dump trucks into a bunker," USSR Patent No. 880931 (1993)].

The disadvantages of such device include a limited number of dump trucks that can simultaneously unload into the storage bunker, which reduces the productivity of the conveyor system. In addition, there is a considerable likelihood of a dump truck driving off the lever after depressing it, and a potential of closing the bunker cover. Dump trucks cannot reverse to reenter for unloading due to the presence of the lever.

Thus, when using such system, it is necessary to arrange for sufficiently wide platforms enabling dump trucks to turn around.

A number of designs of the transfer stations equipped with the power-driven beams are known [B.A. Menshikov and A.G. Sisin, "Ramp for unloading dump trucks above bunker," USSR Patent No. 606796 (1978)]. They operate as follows. A loaded dump truck drives above the bunker along the pivotable beams and unloads while standing thereon. Next, the beams rotate causing mined rock to fall from their surface into the bunker.

However, the driving mechanism of the beams requires additional power for rotation. In addition, the design of the beams for passing dump trucks should be adequate enough to withstand the weight of the vehicle and impact of the mined rock, while properly rotating and returning to their original position. Besides, there is a risk of a stopper failure, which can lead to the dump truck driving off the track.

The objective of the invention is to improve the system for transferring rock from dump trucks to an inclined conveyor, which is achieved by introducing new elements and their interaction by enabling a through passage and unloading of the dump trucks in a given mode of the continuous technological transportation line (especially, hard rock) at deep horizons of the existing iron-ore quarries, which will allow achieving a cost reduction and an increase in labor productivity in general.

This objective is achieved by the fact that the device for unloading mined rock from dump trucks onto an inclined conveyor is provided with a bridge equipped with a load-bearing element resting on the pivotable supports, wherein after passage of a dump truck traveling along the beams, rock is unloaded onto the swing bridges pivotally connected to said beams using pivoting members (block bearings), said bridges being located perpendicular to the beams to ensure opening thereof due to the mined rock weight. In this case, counterweights serving as guardrails are located along the exterior of the beams on both sides thereof and ensure a straight linear movement of the dump trucks having a corresponding load-carrying capacity.

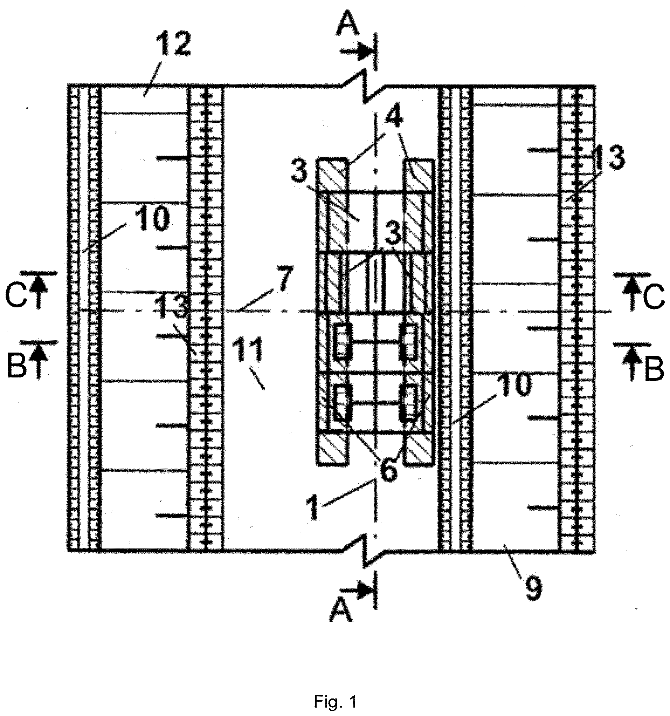

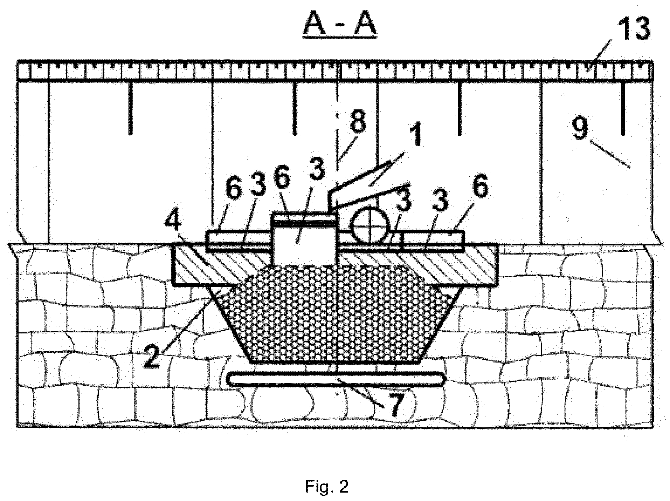

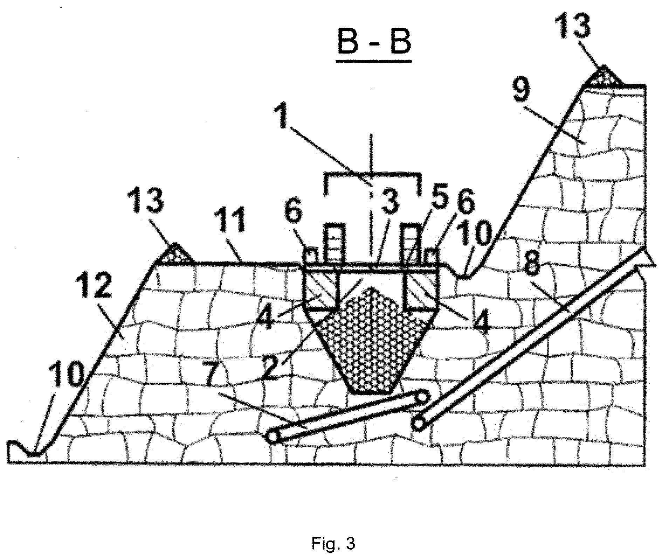

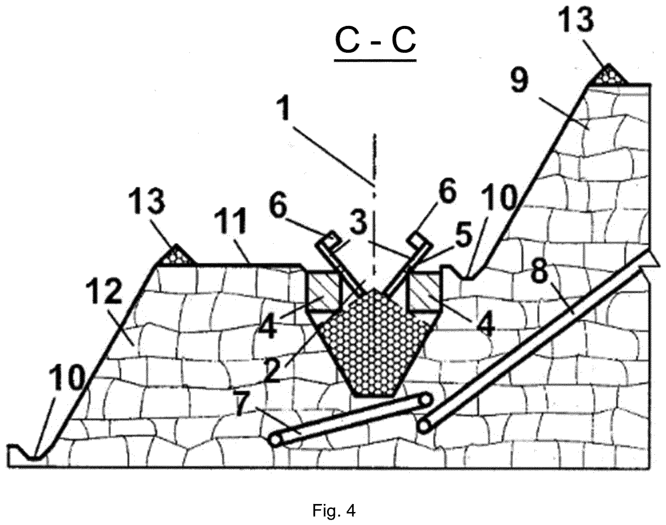

Figure 1 shows a top view of the device for unloading dump trucks onto an inclined conveyor; Figure 2 shows section A-A; Figure 3 shows section B-B; and Figure 4 shows section C-C, where: 1 - dump truck, 2 - storage bunker; 3 - sectional metal paired plates (unloading bridge); 4 - reinforced concrete support beams; 5 - pivoting members (block bearings); 6 - guardrails/counterweights; 7 - transfer apron conveyor (feeder); 8 - inclined conveyor; 9 - upper ledge; 10 - water drainage ditch; 11 - platform for passage of auxiliary equipment; 12 - lower ledge; 13 - protection embankment.

A device for unloading rocks from dump trucks 1 into a bunker 2, which is overspun from the above by identical sectional horizontal paired plates 3, each of which is movably mounted on the corresponding longitudinal load-bearing beams 4 configured to turn the inner edge of each paired plate 3 around the axes of rotation 5 from a horizontal position of each other in the direction of unloading into bunker 2 at an angle greater than the natural slope of the rock being transferred. The safety of the dump trucks 1 passing along the bridge is provided by guardrails/counterweights 6 secured along the exterior edges of each paired plate 3, respectively.

The device operates as follows. Dump truck 1 loaded with rock enters the receiving station equipped with bunker 2 using reinforced concrete beams 4 and proceeds for unloading onto one of the free unloading paired plates 3, which are in a closed position. The plate is movable and can turn around the longitudinal rotation axes 5 of the corresponding supports. Dump truck 1 stops behind the border of paired plates 3 and unloads rock onto them. Under the weight of the rock, paired plates 3 rotate around rotation axes 5 while the longitudinal inner edges move in the direction of unloading into bunker 2. This is accompanied by switching unloading plates 3 from the horizontal position into the open position, which causes the rock to enter bunker 2. When dump truck 1 drives over paired plates 3, guardrails/counterweights 6 serve as a barrier to ensure safe passage. Upon unloading, dump truck 1 drives off the plates 3, while the weight of the guardrails/counterweights causes the open unloading plates 3 to return to the closed position. A continuous unloading cycle of dump trucks 1 into bunker 2 and the straight linear movement thereof above bunker 2 ensure continuous haulage.

After hard rock enters bunker 1, it moves further via a transfer conveyor 7 to a main conveyor 8 or another type of transport used to haul the rock to the surface. To prevent underground water from entering bunker 2, a drainage ditch 10 is constructed at the bottom of the upper ledge 9. To prevent dump trucks 1 and other mobile equipment from falling from the platform used for passage of auxiliary equipment 11 to the lower ledge 12, a protection embankment 13 is constructed on its upper edge.

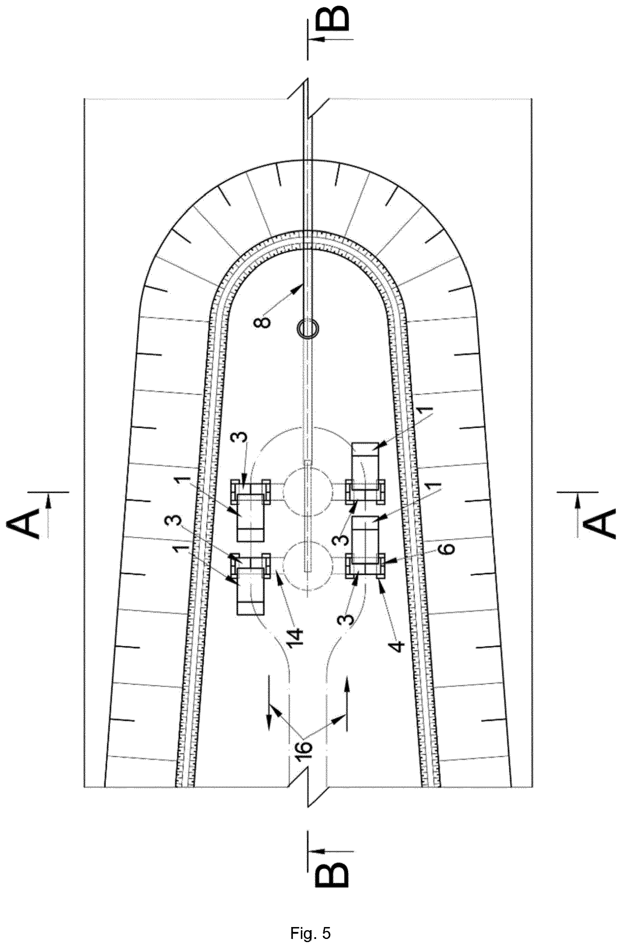

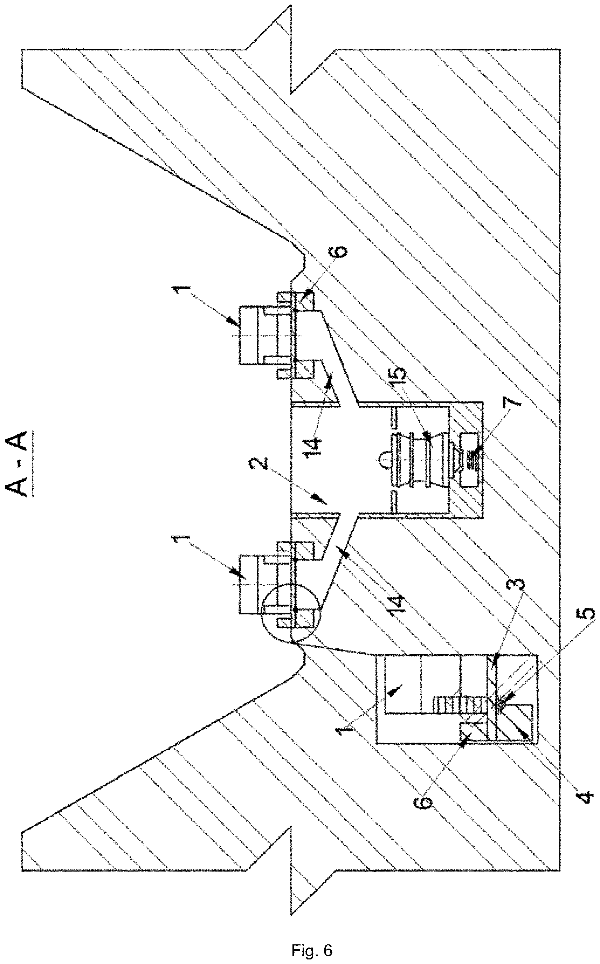

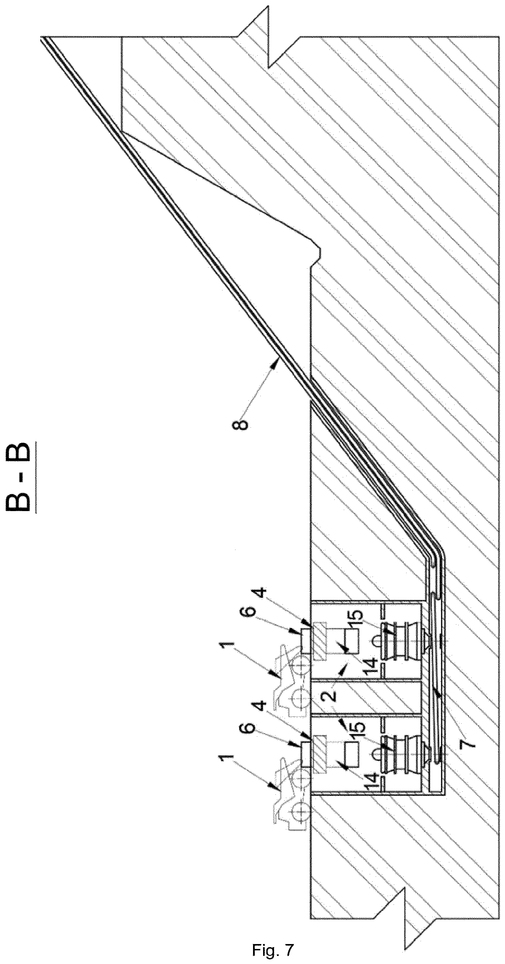

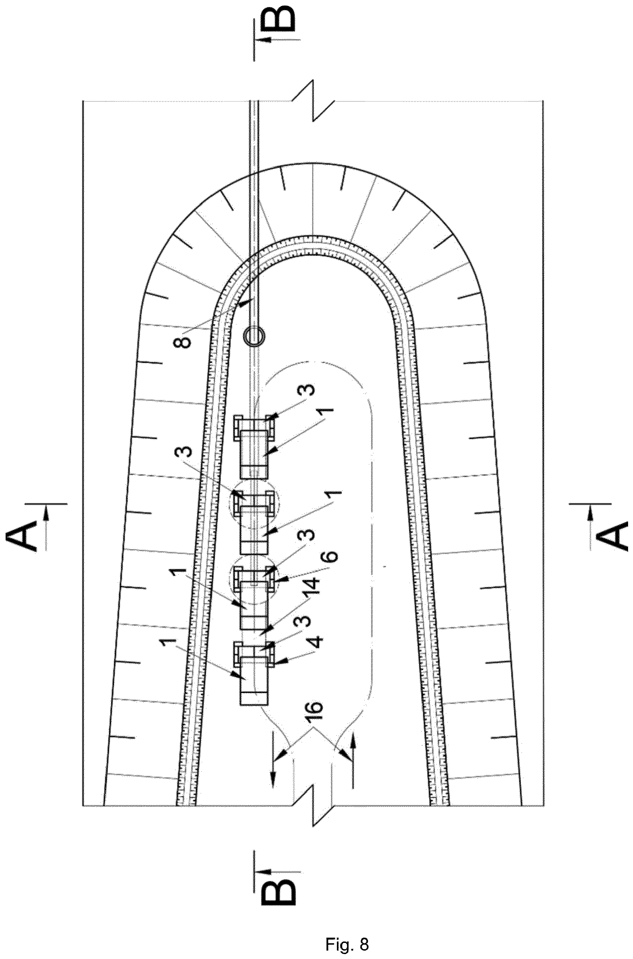

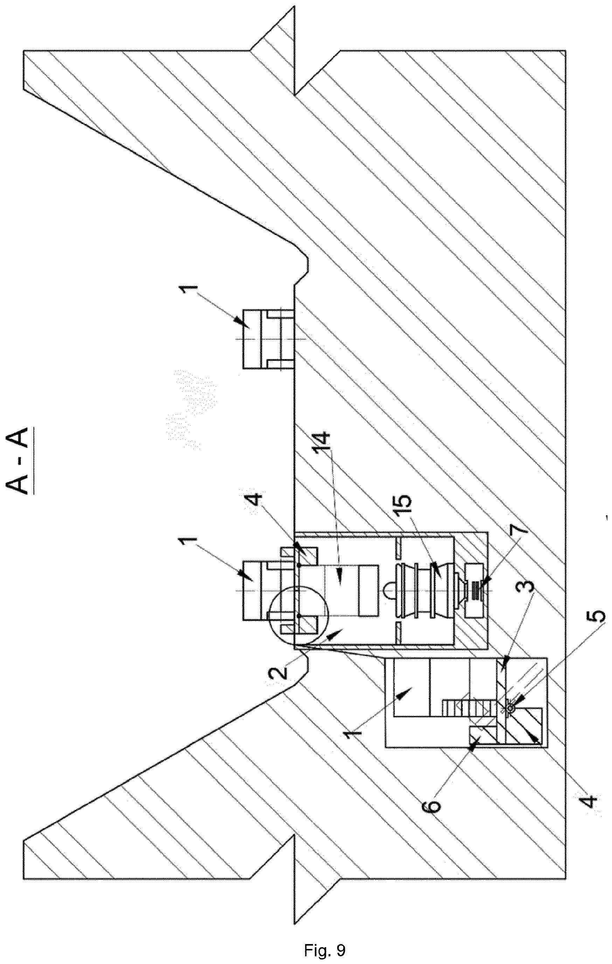

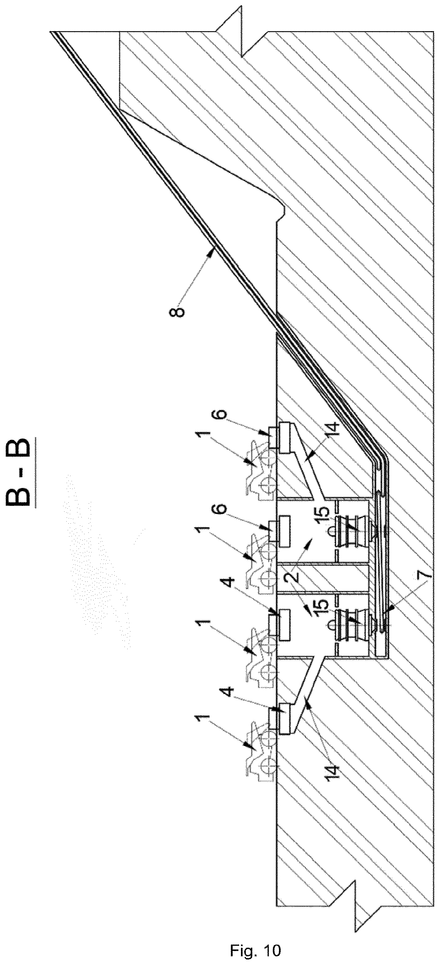

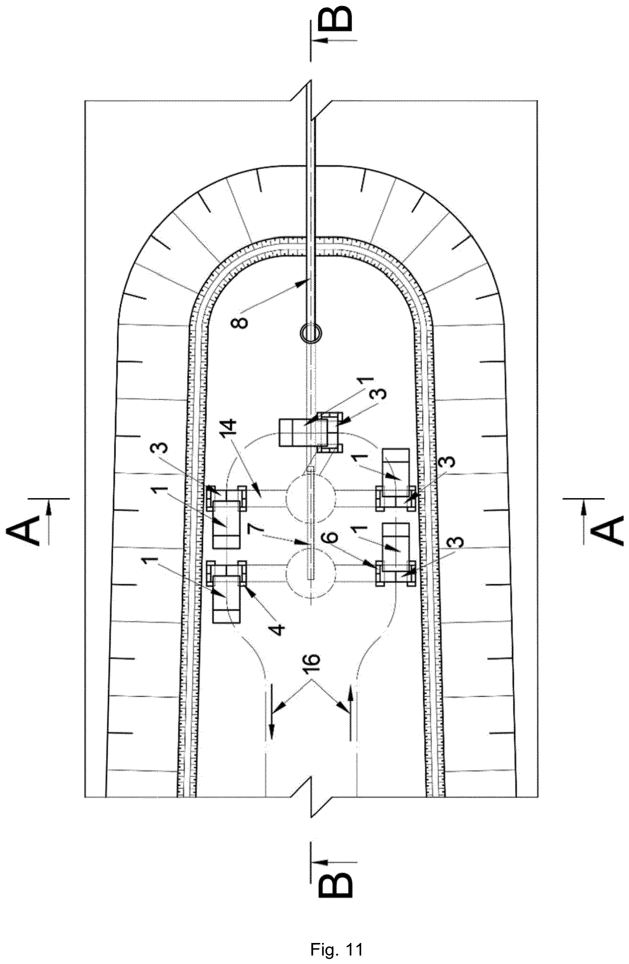

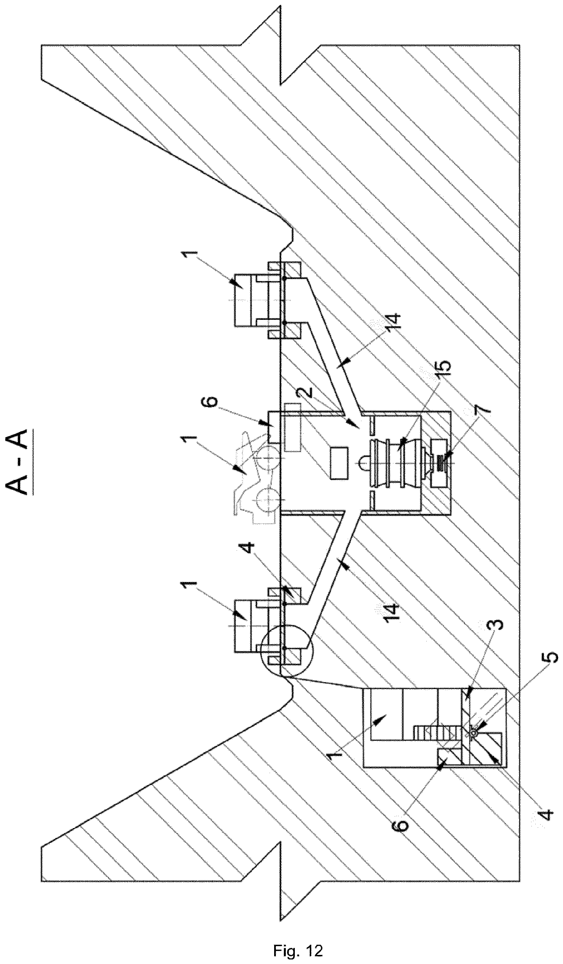

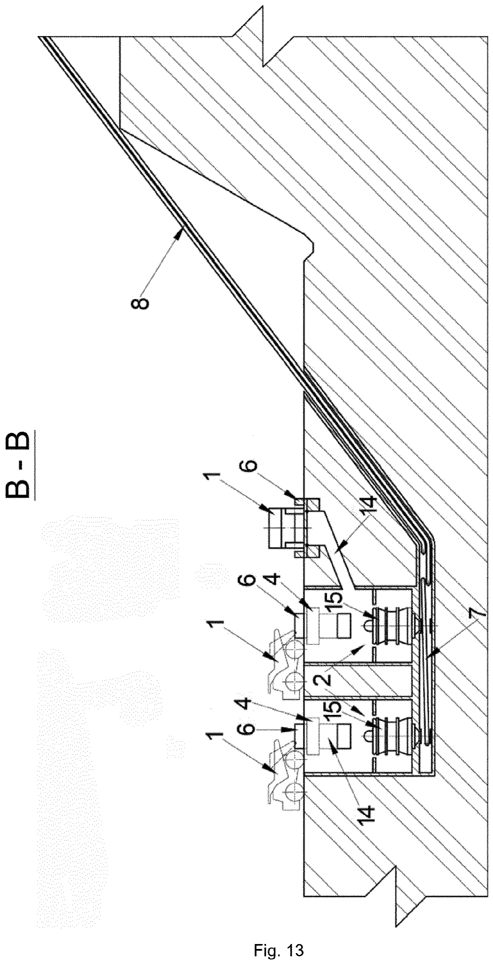

A plain view along with transverse (A-A) and longitudinal (B-B) cross-sections shown in Figs. 5-7, respectively, illustrate a device for unloading 4 (four) dump trucks onto an inclined conveyor from two opposite sides of the bunker. Figures 8-10 show a plain view along with transverse (A-A) and longitudinal (B-B) cross-sections of a device for unloading 4 (four) dump trucks from one side of the bunker. Figures 11-13 show a plain view along with transverse (A-A) and longitudinal (B-B) cross-sections of a device for unloading 5 (five) dump trucks from three sides of the bunker. In addition to items 1 through 13 already shown in Fig. 1-4, these figures show an ore pass 14, a cone crusher 15 (KKD-1500/180), and a direction 16, in which dump trucks are travelling.

Dump trucks 1 loaded with hard rock enter the receiving station equipped with storage bunker 2 by driving over the reinforced concrete beams 4 with guardrails/counterweights 6. The trucks then enter a swing bridge 3 and stop to unload onto the nearest unloading bridge 3 located behind dump trucks 1. Upon unloading, hard rock enters ore pass 14. After hard rock passes unloading bridges 3, it is supplied for crushing via ore pass 14 to a cone crusher 15 (KKD-1500/180), and then transferred via an apron feeder 7 to a steeply inclined conveyor 8 to be transported to the surface for further processing. Dump truck travel directions 16 indicate no maneuvering within a limited area of the transfer station.

The main advantage of simultaneous unloading of up to 4 or 5 (or more) dump trucks consists in ensuring a continuous load of the conveyor belt, which guarantees practical implementation of the design capacity of the IPCC complex, unlike the existing unloading stations with dump truck switchbacks and simultaneous unloading of a maximum of two vehicles. Maneuvering of loaded dump trucks within the transfer stations constantly loosens the ground of the site base, which increases expenses for planning and compaction thereof by rolling. The latter also increases forced downtime of the operating inclined conveyors.

The economic effect (E) from using the proposed device for unloading dump trucks onto a steeply inclined conveyor is calculated by the formula:

$$E = 1/6HC(I+ 2L)(a + 2R + x) = 1/6\square300\square4\square(300 + 2\square1000)(6.4 + 2\square13 + 2) = 43.34 \text{ mln. USD,}$$

where H is the height of the open pit wall, m; C is the cost of extracting 1 m3 of overburden rock; I, L are the widths of the open pit wall along the bottom and top, m; a is the width of the dump truck, m; R is the turning radius of the dump truck, m; x is the safe distance between the bodies of oncoming dump trucks, m.

The use of a device for unloading rock into a bunker with a through passage of dump trucks allows reducing the dump truck haulage duration by reducing the unloading cycle time, and also provides for a simultaneous unloading of several dump trucks, which will increase their productivity. In addition, a reduction in the transfer station footprint makes it possible to lower the volume of capital mining operations during construction of such stations at deep horizon quarries.

With an annual productivity of the transport complex in terms of mined rock of 10 mln. ton, the time required for maneuvering operations depending on the dump truck load-carrying capacity constitutes 1040-3045 hours per year, while fuel consumption reaches 94-204 thousand liters. In terms of diesel fuel, the amount of annual savings from implementation of the transfer stations with through passage of dump trucks over the receiving opening of the bunker will constitute 76-171 thousand U.S. dollars.

**Claims**

**1.** A device for transferring hard rock from a motor vehicle to an inclined conveyor, comprising a bridge with a load-bearing element resting on pivotable supports, **characterized in that** upon passage of a dump truck driving over the beams, hard rock is unloaded onto swing bridges pivotally connected (by block bearings) to said beams positioned perpendicular thereto, while the weight of hard rock being unloaded turns the swing bridges in the horizontal plane around the pivoting members (block bearings) to place them into an open position, after which hard rock passes through an ore pass and enters a cone crusher, followed by a transfer to an inclined conveyor via an apron feeder.

**2.** The device according to claim 1, **characterized in that** the counterweights also serve as guardrails, which are located along the exterior of the beams on both sides thereof and ensure a straight linear passage of dump trucks having a corresponding load-carrying capacity after unloading hard rock.

3. The device according to claims 1, 2, **characterized in that** up to 3-5 or more dump trucks can be unloaded simultaneously within a limited space of the haulage level along one of the sides, two opposite sides, or three sides of the storage bunker, which continuously ensures a uniform loading and design capacity of the inclined conveyor.

Fig. 1

## A - A

Fig. 2

B - B

Fig. 3

Fig. 4

Fig. 5

A - A

Fig. 6

B - B

Fig. 7

Fig. 8

A - A

Fig. 9

EP 3 929 122 A1

13

B - B

Fig. 10

EP 3 929 122 A1

14

Fig. 11

Fig. 12

B - B

Fig. 13

**EP 3 929 122 A1**

## INTERNATIONAL SEARCH REPORT

| | International application No. |
|---|---|
| | PCT/KZ 2019/000012 |

**A. CLASSIFICATION OF SUBJECT MATTER**

B65G67/24 (2006.01); B65G47/18 (2006.01)

According to International Patent Classification (IPC) or to both national classification and IPC

**B. FIELDS SEARCHED**

Minimum documentation searched (classification system followed by classification symbols)

B65G

Documentation searched other than minimum documentation to the extent that such documents are included in the fields searched

Electronic data base consulted during the international search (name of data base and, where practicable, search terms used)

Espacenet, PatSearch, USPTO, RUPTO, PAJ, WIPO

**C. DOCUMENTS CONSIDERED TO BE RELEVANT**

| Category* | Citation of document, with indication, where appropriate, of the relevant passages | Relevant to claim No. |
|---|---|---|
| A | SU 880931 A1 (PAVLOV A.Ju. et al.) 15.11.1981 | 1-3 |
| A | SU 606796 A1 (URALSKY ORDENA TRUDOVOGO KRASNOGO ZNAMENI POLITEKHNICHESKY INSTITUT IM. S.M. KIROVA) 12.04.1978 | 1-3 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 September 2019 (21.09.2019) | 17 October 2019 (17.10.2019) |

| Name and mailing address of the ISA/ RU | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SU 880931

- SU 606796

**Non-patent literature cited in the description**

- **A.YU. PAVLOV ; M.S. ROGACH ; YE.K. KLUBNICHKIN ; YE.YE. IVANOVA ; A.P. PROPLE-TIN.** *Device for unloading dump trucks into a bunker*

- **B.A. MENSHIKOV ; A.G. SISIN.** *Ramp for unloading dump trucks above bunker*